(19) **Europäisches Patentamt**

**European Patent Office**

**Office européen des brevets**

(11) **EP 1 167 003 A2**

(12) **EUROPEAN PATENT APPLICATION**

(43) Date of publication:
02.01.2002 Bulletin 2002/01

(51) Int Cl.⁷: **B29D 30/30**, B29D 30/70

(21) Application number: 01115316.0

(22) Date of filing: 25.06.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 26.06.2000 JP 2000191442

(71) Applicant: SUMITOMO RUBBER INDUSTRIES,
LTD.
Hyogo-ken (JP)

(72) Inventor: **Tanaka, Masatoshi**
**Chuo-ku, Kobe-shi, Hyogo-ken (JP)**

(74) Representative:
**Manitz, Finsterwald & Partner Gbr
Postfach 31 02 20
80102 München (DE)**

(54) **Method of making a pneumatic tire having a tread belt**

(57)    A method of making a pneumatic tire (1) with a breaker (7) and a band (9), comprises: applying a raw breaker material to a cylindrical drum (F); spirally winding a plurality of parallel band cords (10) around the raw breaker material on the cylindrical drum so that angles of the windings are not more than 5 degrees with respect to the tire equator; and gradually increasing one of an average density of the band cords in the tire axial direction and an average tension of the band cords in the tire axial direction, from a center portion of the band towards each axial edge of the band during winding the band cords.

Printed by Jouve, 75001 PARIS (FR)

**Description**

The present invention relates to a method of making a pneumatic tire, more particularly to a method of making a tread belt in which a cylindrical drum is used.

Pneumatic tires provided in the tread portion with a tread belt composed of a breaker and a band thereon are widely used in passenger cars and the like.

Usually, such a belt is manufactured using a belt drum.

For example, a raw breaker material is first applied to a cylindrical belt drum, and then, band cords are spirally wound therearound at a constant cord tension and constant pitches. In the finished tire, on the other hand, the belt has a convex profile due to a convex tread profile and a high inflation pressure during tire vulcanization, etc. and the band cord tension decreases in the belt edge portions in comparison with the central portion. As a result, the constricting force of the band to the breaker tends to become insufficient in the edge portions under high speed running conditions in particular, and it becomes difficult for the belt to effectively improve the high-speed durability, steering stability, noise performance and the like.

In order to solve this problem, a profiled belt drum can be used instead of a cylindrical belt drum. The profiled belt drum may be provided with a convex profile similar to the belt contour in the finished tire. Such a profiled belt drum is made for a specific tire of a specific size although a cylindrical belt drum may be used for a wide variety of tires. Thus, in this method, machinery costs become high, and the tire manufacturing costs increase.

It is therefore, an object of the present invention to provide a method of making a pneumatic tire, in which a belt can be made using a cylindrical belt drum to reduce tire manufacturing costs without deteriorating tire performance such as the high-speed durability, steering stability, noise performance and the like.

According to the present invention, a method of making a pneumatic tire with a breaker and a band, comprises

applying a raw breaker material to a cylindrical drum,
spirally winding a plurality of parallel band cords around the raw breaker material on the cylindrical drum so that angles of the windings are not more than 5 degrees with respect to the tire equator, and
gradually increasing one of

(1) an average density of the band cords in the tire axial direction and
(2) an average tension of the band cords in the tire axial direction

from a center portion of the band towards each axial edge of the band during winding the band cords.

An embodiment of the present invention will now be described in detail in conjunction with the accompanying drawings.

Fig.1 is a cross sectional view of a pneumatic tire according to the present invention.

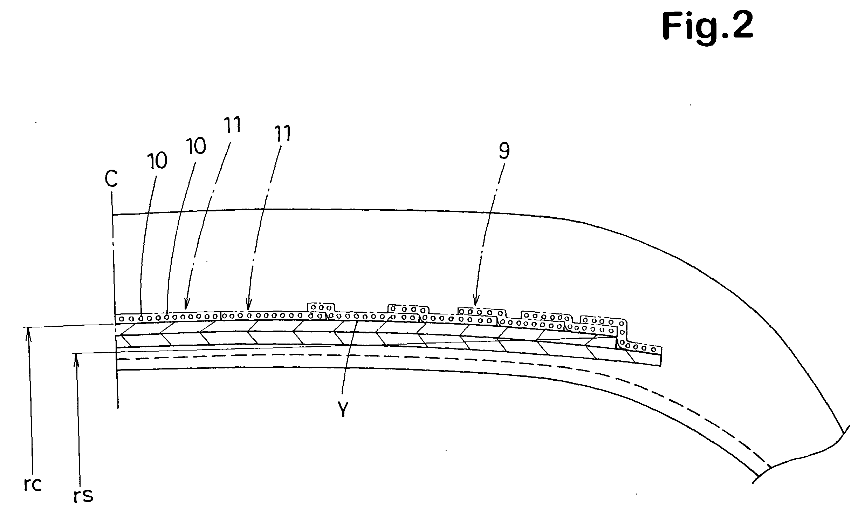

Fig.2 is an enlarged cross sectional view of the tread portion thereof.

Figs.3A and 3B are diagrams for explaining a method of making the tire.

Figs.4A and 4B are cross sectional views each showing an example of the windings of a tape in making the band.

Figs.5A and 5B are cross sectional views showing abutting windings and overlapping windings of a tape.

Fig.6 is a diagram for explaining a winding method with an increasing average density.

Fig.7 is a diagram for explaining a winding method with an increasing average tension.

Fig.8 is a diagram for explaining a method of changing the average tension.

In the drawings, pneumatic tire 1 according to the present invention comprises a tread portion 2, a pair of sidewall portions 3, a pair of bead portions 4 each with a bead core 5 therein, a carcass 6 extending between the bead portions 4, and a tread belt disposed radially outside the carcass 6 in the tread portion 2 and composed of a breaker 7 and a band 9 disposed thereon.

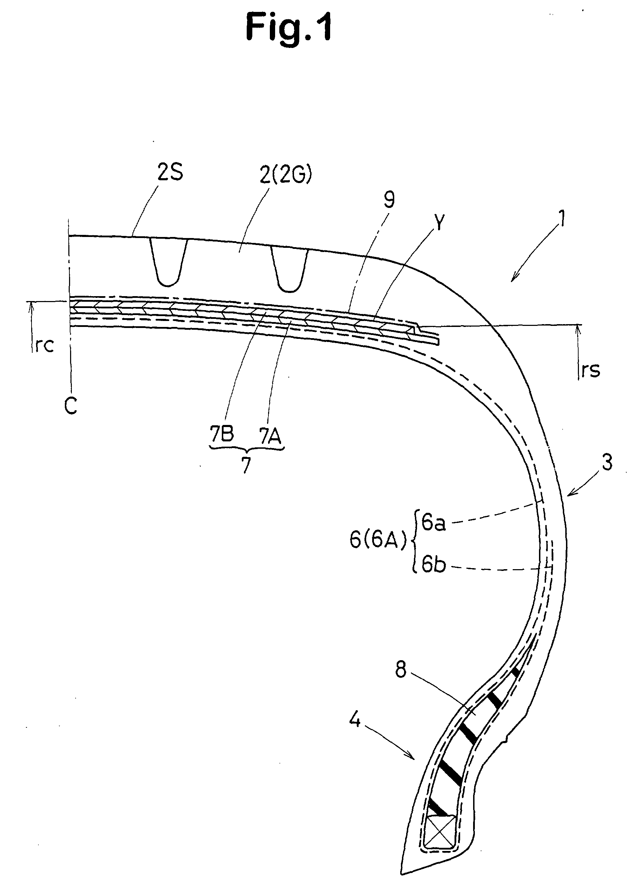

In Fig.1, the pneumatic tire 1 is a radial tire for passenger cars.

The carcass 6 is composed of at least one ply, in Fig.1 only one ply 6A, of carcass cords arranged radially at an angle of from 75 to 90 degrees with respect to the circumferential direction of the tire.

The carcass ply 6A extends between the bead portions 4 through the tread portion 2 and sidewall portions 3 and is turned up around the bead core 5 in each of the bead portions 4 from the inside to the outside of the tire to form a pair of turned up portions 6b and a toroidal main portion 6a therebetween.

For the carcass cords, organic fiber cords, e.g. nylon, polyester, rayon, aromatic polyamide and the like may be preferably used in the passenger car tires. In this invention, however, it is also possible to use steel cords according to the tire size, uses and the like.

Between the main portion 6a and turned up portion 6b in each of the bead portions 4, a bead apex rubber 8 is disposed. The bead apex rubber 8 extends radially outwardly from the bead core 5, while tapering towards its radially outer end.

In the tread belt, an essential difference between the breaker 7 and band 9 is their cord angles. In the band 9, the cord angle is not more than 5 degrees with respect to the tire equator. In the breaker 7, the cord angle is more than 5 degrees, usually more than about 10 degrees with respect to the tire equator.

The breaker 7 is disposed on the radially outside of the carcass 6 and composed of at least two cross plies 7A and 7B which extend across the tread width.

The breaker 7 in this example is composed of only two plies 7A and 7B of high-strength cords laid obliquely at angles of from 10 to 35 degrees with respect to the tire circumferential direction. The radially inner ply 7A is wider than the radially outer ply 7B. For the breaker cords, steel cords, high-modulus organic fiber cords, e.g. aromatic polyamide and the like are preferably used.

In the meridian section of the tire, the tread portion 2 has a convex profile 2S which is curved symmetrically about the tire equator. The breaker 7 also has a convex profile Y which is substantially parallel with the tread profile 2S.

The breaker profile Y is such that the ratio (rs/rc) of the radius (rc) of curvature at the tire equator and the radius (rs) of curvature at the axially outer edges of the breaker is set in a range of from 0.99 to 0.96 in case of passenger car tires.

The band 9 is disposed on the radially outside of the breaker 7 and extends across the overall width of the breaker 7. The band 9 is made of at least two cords 10 and the angle formed between each band cord 10 and the tire circumferential direction is not more than 5 degrees.

The pneumatic tire 1 is made as follows.

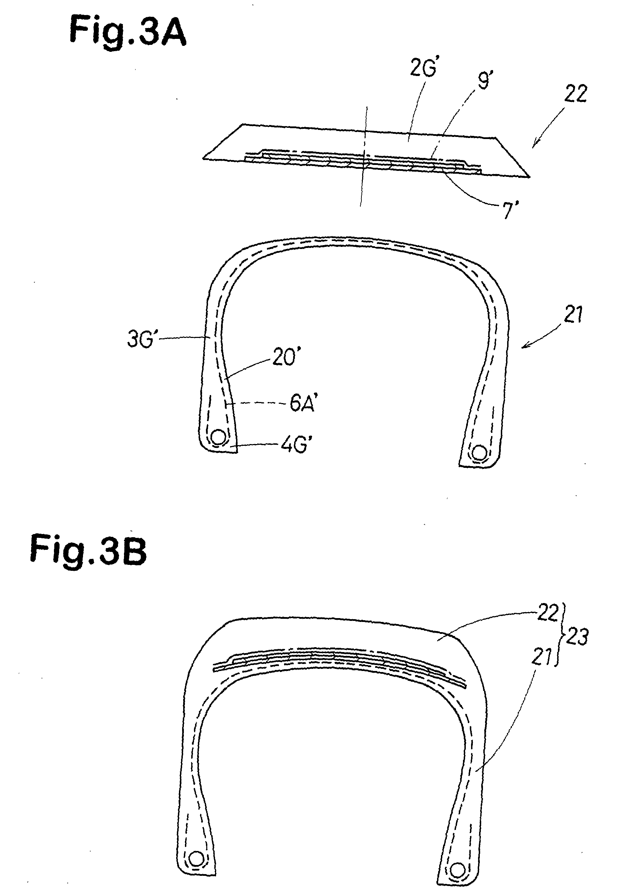

A raw tire 23 as shown in Fig.3B is made by assembling a tire main body 21 and a tread ring 22 as shown in Fig.3A. Then, the raw tire 23 is put in a vulcanization mold and vulcanized. Using a tire building drum (not shown), the tire main body 21 is made from a raw inner liner rubber 20', a raw sidewall rubber 3G', a raw bead rubber 4G', a raw carcass ply 6A' and the like. The tread ring 22 is made from a raw breaker 7', a raw band 9', a raw tread rubber 2G' and the like, using a cylindrical drum F.

In order that the band 9 in the finished tire 1 can provide a constricting force to the breaker which is suitable for the breaker profile Y in effectively improving the high-speed durability, steering stability, noise performance and the like, the band is made by winding the band cords 10 around the cylindrical drum F, while increasing

(1) the average density D or
(2) the average tension T

in the direction from the tire equator to each of the band edges 9E.

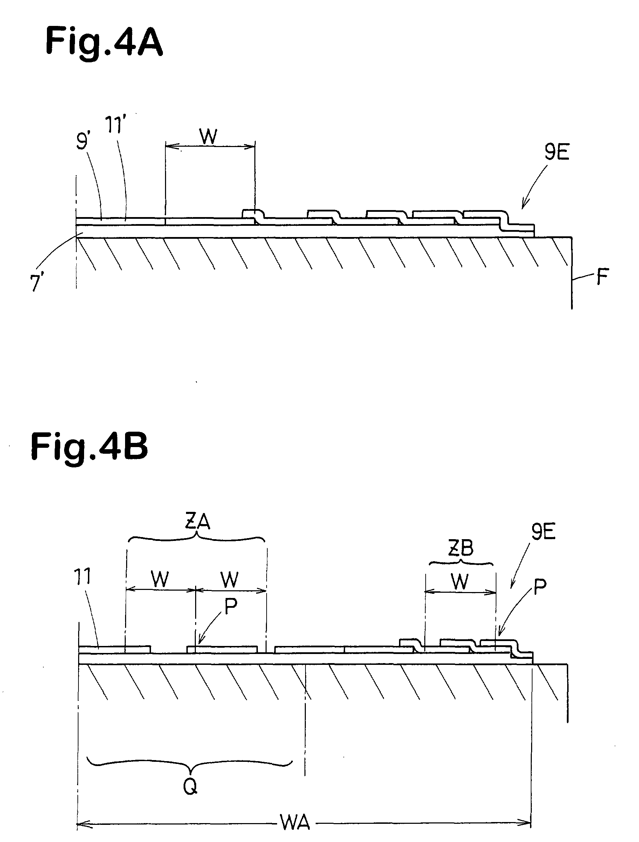

In case (1) of the increasing average density D, as shown in Fig.4A, the raw breaker 7' is first applied to the cylindrical drum F into a cylindrical shape, and then on the radially outside of the raw breaker 7', a tape 11 is spirally wound at a constant tension across the entire width of the raw breaker 7'.

The tape 11 is a raw rubber tape in which band cords 10 are embedded along the length thereof in parallel with each other. The width W of the tape 11 is preferably in a rang of from 3 to 20 mm.

As for the band cords 10, organic fiber cords, e.g. nylon, polyester, rayon, aromatic polyamide and the like are preferably used. Further, steel cords waved to increase the extensibility may be used. The band cords 10 should have extensibility in some degree to obtain stably the breaker profile Y during vulcanizing the tire.

The average density D at a position P is defined as the quotient NA/2W of the number NA of the band cords 10 divided by two times the width W in mm. Here, the number NA of the band cords 10 is counted in the tire axial direction in a region ZA as shown in Fig.4B. The region ZA is defined as being centered at the position and having a width of two times the width W. If the position P is near or at the band edges 9E and as a result the width on one side of the position P is less than the width W, then a narrow region ZB of the width W is set on the other side (axially inside) of the position P, and using the number NB of the band cords 10 counted in this region ZB, the average density D is defined as the quotient NB/W of the number NB divided by the width W in mm.

During winding the band cords, the average density D is increased gradually, namely, continuously or stepwise from the tire equator to the axially outer edges 9E.

In order to increase the average density D continuously for example, the speed V of the tape 11 traversing the cylindrical drum F in parallel with the axis of the drum is changed continuously during rotating the drum at a constant speed.

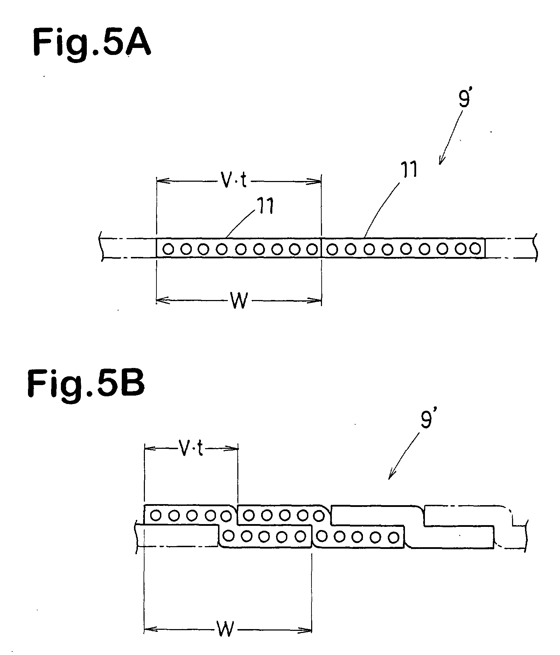

When the product of the traversing speed V and the time (t) of each rotation of the cylindrical drum F is equal to the width W (namely, V x t = W), the edges of the adjacent windings of the tape 11 abut each other as shown in Fig.5A. When V x t = 0.5W, the windings overlap each other and a double-layered structure is formed.

Preferably, the traversing speed V is changed between W/t and 0.5W/t, such that no gap is formed between the adjacent windings as shown in Fig.4A.

As for a central region Q of the band 9 defined as having 50 % of the overall width WA thereof, it may be possible to provide gaps between the windings of the tape 11 as shown in Fig.4B by setting the traversing speed V over W/t.

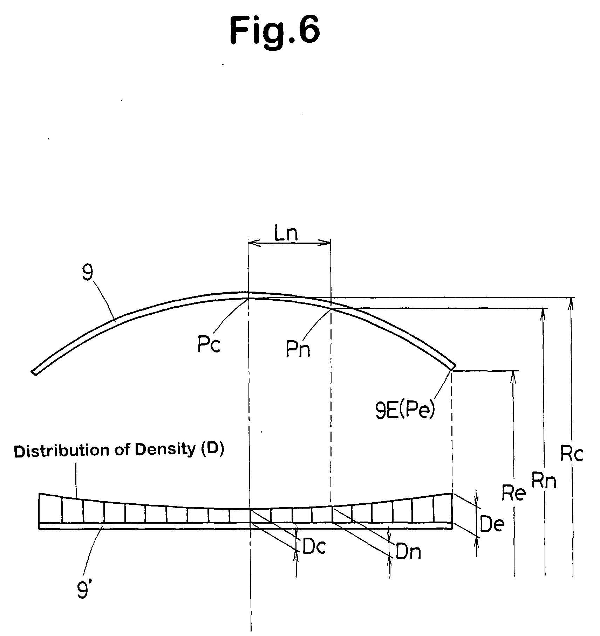

As shown in Fig.6, the average density Dc at a position Pc at the tire equator, the average density Dn at any position Pn at a certain distance Ln from the tire equator, and the radii Rc and Rn of the inner surface of the band in the finished tire 1 measured at the positions Pc and Pn, respectively, can satisfy the following equation (1)

$$Dn = Dc \times (Rc/Rn).$$

By satisfying this condition, the band 9 can provides a constricting force which is substantially constant across the overall width thereof. Such a uniform constricting force may increase the effect to improve tire performance such as tire uniformity, uneven wear resistance, high-speed durability, steering stability, noise performance and the like.

However, it is also possible to vary the constricting force of the band.

In case that the breaker 6 is made from a strip of rubberized parallel cords having cut edges, it will be effectual for increasing the effect to improve the tire performance that the constricting force to the breaker edges is greater than the constricting force in the central portion but less than 3.0 times the constricting force in the central portion.

In this case, the average density De at positions Pe of the band edges 9E, and the radius Re of the inner surface of the band in the finished tire 1 measured at these positions Pe are set to satisfy the following equation (2)

$$Dc \times (Rc/Re) < De =< 3.0 \times Dc \times (Rc/Re).$$

It will be preferable for further increasing the effect to improve the tire performance, that the constricting force in the breaker edge portions is set in a range of from 1.5 to 2.5 times the constricting force in the central portion. Therefor, the following equation (2A) is satisfied

$$1.5 \times Dc \times (Rc/Re) < De =< 2.5 \times Dc \times (Rc/Re).$$

In case (2) of the increasing average tension T, the raw breaker 7' is first applied to the cylindrical drum F into a cylindrical shape, and then on the radially outside of the raw breaker 7', a tape 11 is spirally wound, while keeping the average density D constant across the overall width of the breaker 7'.

Here, the average tension T at a position P is defined as the average of tensions of the band cords 10 which exist in the region ZA centered at the position P and having a width of two times the width W. If the position P is near or at the band edges 9E and as a result the width on one side of the position P is less than the width W, then the narrow region ZB of the width W is set on the other side (axially inside) of the position P, and the average tension T is defined as the average of tensions of the band cords 10 which exist in the region ZB.

The average tension T is increased gradually, namely, continuously or stepwise from the tire equator to the band edges 9E.

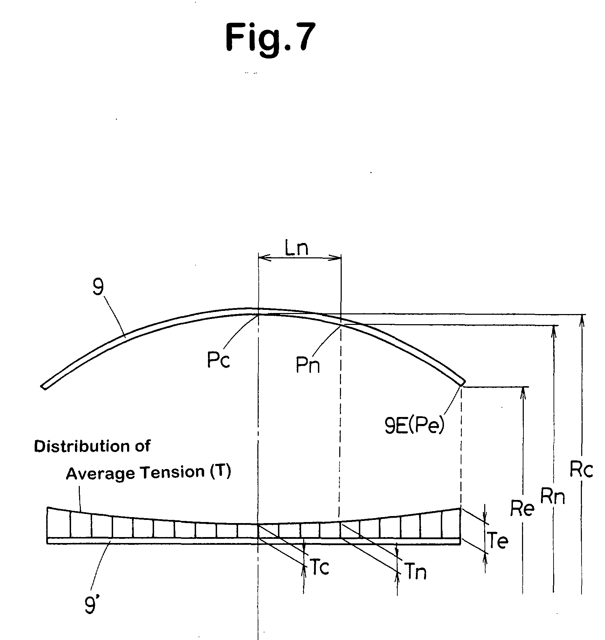

As shown in Fig.7, the average tensions Tc at the position Pc at the tire equator, the average tension Tn at any position Pn at a certain distance Ln, and the radii Rc and Rn of the inner surface of the band in the finished tire 1 measured at the positions Pc and Pn, respectively, can satisfy the following equation (3)

$$Tn = Tc \times (Rc/Rn).$$

By satisfying this condition, the band 9 can provide a constricting force which is substantially constant across the overall width thereof to increase the effect to improve tire performance.

It is however, also possible to change the constricting force.

For example, in the above-mentioned breaker 6 the constricting force to the breaker edge portion can be preferably set in a range of not more than 3.0 times more preferably in a range of 1.5 to 2.5 times the constricting force in the central portion. Therefor, the average tension Te at positions Pe of the band edges 9E, and the radius Re of the inner surface of the band in the finished tire 1 measured at the positions Pe are set to satisfy the following equation (4)

$$Tc \times (Rc/Re) < Te =< 3.0 \times Tc \times (Rc/Re)$$

or the following equation (4A)

$$1.5 \times Tc \times (Rc/Re) < Te =< 2.5 \times Tc \times (Rc/Re).$$

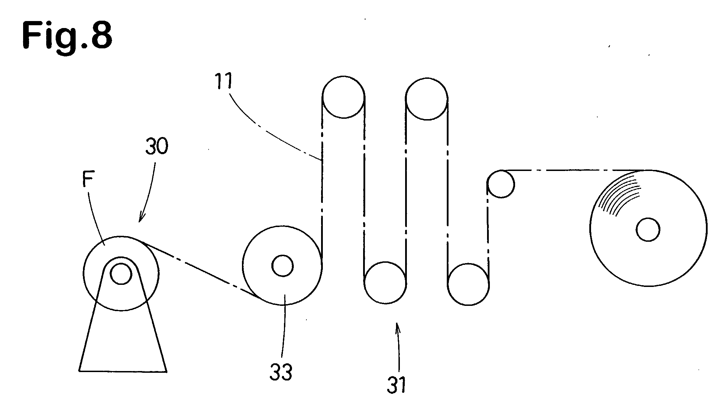

Fig.8 show a method of changing the average tension T, wherein a tension controller 33 comprising a brake for the tape is provided between an accumulator 31 for the tape 11 and a band making apparatus 30 which includes the cylindrical drum F.

**Comparison Tests**

Test tires of size 215/45R17 for passenger cars having the structure shown in Fig.1 were made and tested for high-speed durability, steering stability, and noise performance. The results are shown in Table 1.

(1) High-speed durability Test

The test tire mounted on a standard rim (17X7.5J size) was subjected to an indoor wheel test under accelerated conditions (Tire inflation pressure: 320 kPa, Tire load: 3640 N) according to the Procedure for Load/Speed Performance Tests of the Economic Commission for Europe (ECE-30). The running speed was increased every 30 minutes at steps of 10 km/h from initial speed of 170 km/h, and the speed at which any failure occurred was measured together with the running time at that speed.

(2) Steering stability test

A 2000cc FF passenger car provided on all the four wheels with test tires was run on a dry asphalt road in a test course under a normal pressure of 200 kPa, and the test driver evaluated steering stability based on the hand response, rigidity, grip and the like. The results are indicated by an index based on Ref. tire being 100, wherein the larger the index number, the better the steering stability.

(3) Noise test

During the above-mentioned test car was coasted on a smooth road surface at a speed of 50 km/h, noise was evaluated by the test driver. The results are indicated by an index based on Ref. tire being 100, wherein the larger the index number, the better the noise.

Table 1

| Tire | Ref. | Ex.A1 | Ex.A2 | Ex.A3 | Ex.B1 |
|---|---|---|---|---|---|
| Radius Rc (mm) | 300.5 | 300.5 | 300.5 | 300.5 | 300.5 |
| Radius Re (mm) | 295 | 295 | 295 | 295 | 295 |
| Width W (mm) | 10 | 10 | 10 | 10 | 10 |
| Average Density (cord number/mm) | constant | increase | increase | increase | constant |
| De | 1 | 1.02 | 2 | 3 | 1 |
| Dc | 1 | 1 | 1 | 1 | 1 |
| De/Dc | 1 | 1.02 | 2 | 3 | 1 |
| Average tension (N) | constant | constant | constant | constant | increase |
| Te | 10 | 10 | 10 | 10 | 10.2 |
| Tc | 10 | 10 | 10 | 10 | 10 |
| Te/Tc | 1 | 1 | 1 | 1 | 1.02 |
| High-speed durability(km/hr-min.) | 270-10 | 280-5 | 290-20 | 290-20 | 280-5 |
| Steering stability | 100 | 110 | 115 | 115 | 110 |
| Noise performance | 100 | 110 | 120 | 125 | 110 |

**Claims**

1. A method of making a pneumatic tire,

   said pneumatic tire comprising

   a tread portion,
   a pair of sidewall portions,
   a pair of bead portions,
   a carcass extending between the bead portions, and
   a belt disposed radially outside the carcass in the tread portion, said belt composed of a breaker and a band disposed on the radially outside of the breaker,

   said method comprising

   applying a raw breaker material to a cylindrical drum,
   spirally winding a plurality of parallel band cords around the raw breaker material on the cylindrical drum so that angles of the windings are not more than 5 degrees with respect to the tire equator, and gradually increasing one of

   (1) an average density of the band cords in the tire axial direction and
   (2) an average tension of the band cords in the tire axial direction

   from a center portion of the band towards each axial edge of the band during winding the band cords.

2. The method according to claim 1, wherein

   the average density Dc of the band cords at a position Pc at the tire equator,
   the average density Dn of the band cords at any position Pn at a certain distance (Ln) from the tire equator,
   the radius Rc of the inner surface of the band in the finished tire at the positions Pc, and
   the radius Rn of the inner surface of the band in the finished tire at the positions Pn

   satisfy the following condition

   $$Dn = Dc \times (Rc/Rn).$$

3. The method according to claim 1, wherein

   the average density Dc of the band cords at a position Pc at the tire equator,
   the average density Dn of the band cords at any position Pn at a certain distance (Ln) from the tire equator,
   the radius Rc of the inner surface of the band in the finished tire at the positions Pc, and
   the radius Rn of the inner surface of the band in the finished tire at the positions Pn

   satisfy the following condition

   $$Dc \times (Rc/Re) < De =< 3.0 \times Dc \times (Rc/Re)$$

4. The method according to claim 2 or 3, wherein
   said plurality of parallel band cords traverse the cylindrical drum along the axis of the drum, and the traversing speed is continuously changed, while rotating the drum at a constant speed, whereby the average density is gradually increased.

5. The method according to claim 1, wherein

   the average tension Tc of the band cords at a position Pc at the tire equator,
   the average tension Tn of the band cords at any position Pn at a certain distance (Ln) from the tire equator,

the radius Rc of the inner surface of the band in the finished tire at the positions Pc, and
the radius Rn of the inner surface of the band in the finished tire at the positions Pn

satisfy the following condition

$$Tn = Tc \times (Rc/Rn).$$

6. The method according to claim 1, wherein

the average tension Tc of the band cords at a position Pc at the tire equator,
the average tension Tn of the band cords at any position Pn at a certain distance (Ln) from the tire equator,
the radius Rc of the inner surface of the band in the finished tire at the positions Pc, and
the radius Rn of the inner surface of the band in the finished tire at the positions Pn

satisfy the following condition

$$Tc \times (Rc/Re) < Te =< 3.0 \times Tc \times (Rc/Re).$$

# Fig.1

Fig.2

EP 1 167 003 A2

# Fig.3A

# Fig.3B

# Fig.4A

# Fig.4B

# Fig.5A

# Fig.5B

EP 1 167 003 A2

# Fig.6

13

# Fig.7

# Fig.8